# EUROPEAN PATENT APPLICATION

(11) **EP 4 252 597 A1**
(43) Date of publication of application: **04.10.2023**
(21) Application number: 22908796.0
(22) Date of filing: 16.05.2022
(51) Int. Cl.: A47J 19/02, A47J 19/06, A47J 19/00, A23N 1/00

(54) **SQUEEZING DEVICE AND JUICE EXTRACTOR**

(30) Priority: 16.02.2022 CN 202210142393
(71) Applicant: Islow Electric (Zhong Shan) Co., Ltd, Zhongshan, Guangdong 528411 (CN)
(72) Inventor: LI, Wei, Zhongshan, Guangdong 528411 (CN); ZHANG, Qin, Zhongshan, Guangdong 528411 (CN); LI, Ping Ping, Zhongshan, Guangdong 528411 (CN)
(74) Representative: Chung, Hoi Kan
(86) International application number: PCT/CN2022/093099
(87) International publication number: WO 2023/155311

(57) **Abstract**

The invention provides a squeezing device , which comprises a squeezing structure and a squeezing head; the internal of the squeezing device is provided with a holding cavity, a squeezing cavity and a diversion cavity, the diversion cavity has a relatively arranged connection port I and a connection port II, the connection port I is connected to the holding cavity, and the connection port II is connected to the squeezing cavity; the cross section area of the connection port I is greater than that of the connection port II; the squeezing head is at least partially placed in the squeezing cavity, and the squeezing head is arranged with respect to the squeezing structure for relative rotation. The main body is used to drive the squeezing head of the squeezing device for rotation.

## Description

### TECHNICAL FIELD

The invention relates to the technical field of juicing device, in particular to a squeezing device and a juicer.

### BACKGROUND

Fruit juice is a kind of healthy drink, which is increasingly popular in people's daily life. People can drink juice at home, or drink drinks in beverage stores, which are associated with the juicer. Juicer is widely used in daily life. It can make fruit and vegetable juice for easy drinking.

The efficiency of a juicer is usually limited by the capacity of the juicer. When the capacity of the juicer is large, although it can accommodate more fruit at one time, it will increase the inertia of the squeezing head when increasing the size of the squeezing head due to the limited squeezing efficiency of the squeezing head, thus affecting the stability of the juicer operation, and the squeezing effect is not good.

### SUMMARY

In view of this, the invention provides a squeezing device and a juicer, which are used to solve the problem of poor squeezing efficiency of traditional juicer.

The invention provides a squeezing device, comprising:
a squeezing structure, wherein the internal of the squeezing structure is provided with a holding cavity, a squeezing cavity and a diversion cavity, the diversion cavity has a relatively arranged connection port I and a connection port II, the connection port I is connected to the holding cavity, and the connection port II is connected to the squeezing cavity; wherein the cross-sectional area of the connection port I is greater than that of the connection port II; and
a squeezing head, the squeezing head is at least partially placed in the squeezing cavity, and the squeezing head is arranged with respect to the squeezing structure for relative rotation.

According to an embodiment of the invention, the diversion cavity is at least partially of conical diversion cavity or helical diversion cavity.

According to an embodiment of the invention, the included angle between the bus bar of the diversion cavity and the horizontal plane is D, and 10°≤D≤80°.

According to an embodiment of the invention, the cross section diameter of the holding cavity is A, and 100mm≤A≤500mm.

According to an embodiment of the invention, the cross section diameter of the diversion cavity is B, and 60mm≤B≤200mm.

According to an embodiment of the invention, the ratio of the cross section diameter of the connection port I to that of the connection port II is not greater than 10.

According to an embodiment of the invention, the diversion cavity and the holding cavity are eccentrically arranged.

According to an embodiment of the invention, the squeezing device also includes a cover body, and the cover body is provided with a feeding port connected with the holding chamber, and the cross section diameter of the feeding port is not greater than 45mm.

According to an embodiment of the invention, the squeezing device is also provided with a discharging part arranged on the inner wall of the diversion cavity.

The invention also provides a juicer, comprising:
a main body; and
the squeezing devices of any one of the above embodiments, the squeezing device is detachable and can be connected to the main body, which is used to drive the squeezing head of the squeezing device for rotation.

According to an embodiment of the invention, the juicer also includes an induction part, which is arranged on the main body; when the squeezing device is connected with the main body, the induction part is used to obtain the position signal of the squeezing device.

According to an embodiment of the invention, the squeezing device also includes a contact part, the contact part is at least partially protruding from the squeezing structure, the main body is provided with a connecting groove, and the induction part is at least partially arranged in the connecting groove; when the squeezing device is connected with the main body, the contact part is inserted into the connecting groove and contact with the induction part.

The implementation of the embodiment of the invention can bring the following beneficial effects:
When the squeezing device of this embodiment is used, the fruit can be placed into the holding cavity of the squeezing structure, brought into the squeezing cavity and squeezed through the squeezing head by setting for engagement of the diversion cavity and the squeezing cavity. This setting can make the squeezing head has a compact structure, increase the capacity of the squeezing device, increase the squeezing efficiency, and bring good results.

For the juicer of this embodiment, the squeezing efficiency can be improved by setting the squeezing device mentioned above, which is simple in structure and good in use.

### BRIEF DESCRIPTION OF DRAWINGS

To more clearly illustrate the technical scheme in the embodiment of the invention or in the prior art, a brief description of the drawings required to be used in the embodiment or in the description of the prior art is presented below. It is obvious that the drawings described below are merely embodiments of the invention, and that other drawings may be obtained from them without any creative effort on the part of the ordinary technician in the field.

Where:
FIG. 1 is a stereo view of a juicer in an embodiment of the invention;
FIG. 2 is a section view of a juicer in an embodiment of the invention;
FIG. 3 is an overhead view of a squeezing structure in an embodiment of the invention;
FIG. 4 is a section view of a squeezing structure in an embodiment of the invention;

### Drawing marks:

10. Juicer; 100. Squeezing device; 110. Squeezing structure; 111. Holding cavity; 112. Squeezing cavity; 113. Diversion cavity; 1131. Connection port I; 1132. Connection port; 120. Squeezing head; 130. Cover body; 131. Feeding port; 140. Contact part; 150. Discharging part; 200. Main body; 210. Connecting groove; 300. Induction part.

### DETAILED DESCRIPTION OF THE EMBODIMENTS

Next, the technical scheme in the embodiment of the invention is described clearly and completely in combination with the drawings attached in the embodiment of the invention. Obviously, the embodiments described are only partial embodiments of the invention, but not all embodiments. Based on the embodiments of the invention, all other embodiments obtained by ordinary technicians in the field without creative labor are within the scope of protection of the invention.

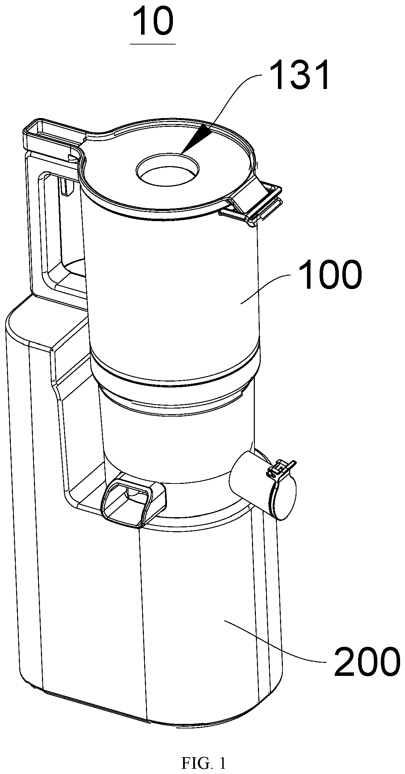

Referring to FIG. 1, the embodiment of the invention provides a juicer 10, which comprises a squeezing device 100 and a main body 200. The squeezing device 100 is used for juicing, and the main body 200 is used for driving the squeezing device 100. The squeezing device 100 is detachable and connected to main body 200.

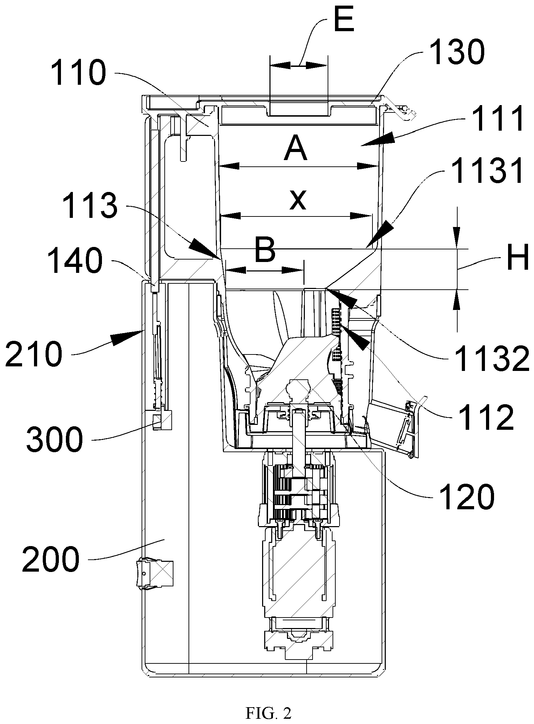

Specifically, as shown in FIG. 2, the squeezing device 100 comprises a squeezing structure 110 and a squeezing head 120; the internal of the squeezing device 100 is provided with a holding cavity 111, a squeezing cavity 112 and a diversion cavity 113, the diversion cavity 113 has a relatively arranged connection port I 131 and a connection port II 132, the connection port I 131 is connected to the holding cavity 111, and the connection port II 132 is connected to the squeezing cavity 112; the cross section area of the connection port I 131 is greater than that of the connection port II 132; the squeezing head 120 is at least partially placed in the squeezing cavity 112, and the squeezing head 120 is arranged with respect to the squeezing structure 110 for relative rotation. The main body 200 is used to drive the squeezing head 120 of the squeezing device 100 for rotation.

When the squeezing device 100 of this embodiment is used, the fruit can be placed into the holding cavity 111 of the squeezing structure 110, brought into the squeezing cavity 112 and squeezed through the squeezing head 120 by setting for engagement of the diversion cavity 113 and the squeezing cavity 112. This setting can make the squeezing head 120 has a compact structure, increase the capacity of the squeezing device 100, increase the squeezing efficiency, and bring good results.

For the juicer 10 of this embodiment, the squeezing efficiency can be improved by setting the squeezing device 100 mentioned above, which is simple in structure and good in use.

Specifically, the diversion cavity 113 is at least partially of conical diversion cavity 113 or helical diversion cavity 113.

As shown in FIG. 1 and FIG. 2, in this embodiment, diversion cavity 113 is conical diversion cavity 113; in other embodiments, the diversion cavity 113 can also be a helical diversion cavity 113. The efficiency of diversion cavity 113 can be improved by setting diversion cavity 113 to be helical.

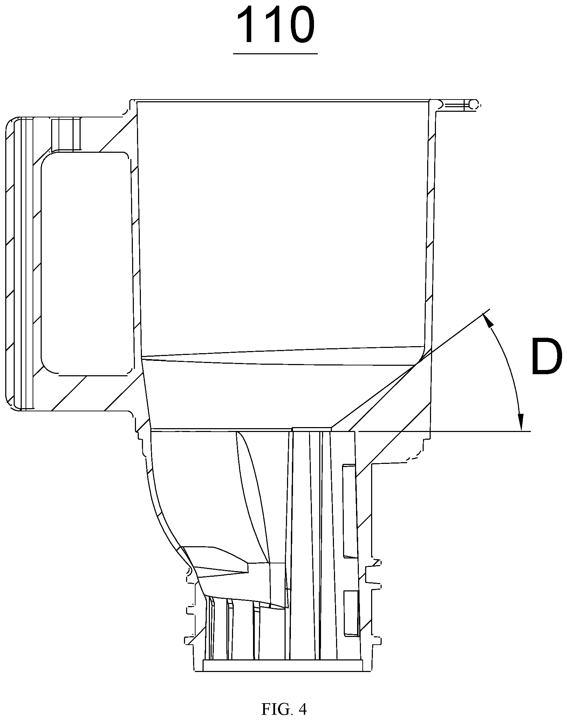

As shown in FIG. 4, in an embodiment, the included angle between the bus bar of the diversion cavity 113 and the horizontal plane is D, and 10°≤D≤80°.

Specifically, angle D is preferably 20°. In some embodiments, angle D can also be 36.8°, 45°, etc., which will not be repeated here. By setting the diversion cavity 113 to form an angle D, the fruit located in the holding cavity 111 can enter the squeezing cavity 112 under the diversion action of the inner wall of the diversion cavity 113 to avoid the fruit sticking and to make the squeezing structure 110 have a compact structure.

As shown in FIG. 2, the cross section diameter of the holding cavity 111 is A, and 100mm≤A≤500mm.

Specifically, A can be 100mm, 150mm, 300mm, or selected according to the actual size of juicer 10, which is not specified here.

Further, the cross section diameter of the diversion cavity 113 is B, and 60mm≤B≤200mm.

Specifically, B can be 60mm, 80mm, 200mm, or selected according to the actual size of juicer 10. It should be noted that, in general, the dimensions of the diversion cavity 113 at the connection port I 1131 can be the same as the dimensions of the holding cavity 111. In some embodiments, the connection port I 1131 may also be smaller than or greater than the size of the holding cavity 111 and is not specified here.

Specifically, as shown in FIG. 2, the ratio of the cross section diameter of the connection port I 1131 to that of the connection port II 1132 is no more than 10.

Such setting maintains the tilting angle of the diversion cavity 113 to achieve the best transfer efficiency and balance the optimal volume of the squeezing structure 110.

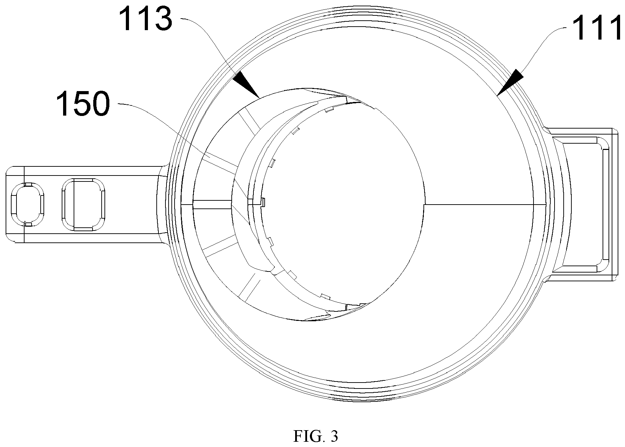

As shown in FIG. 2 and FIG. 3, in an embodiment, the diversion cavity 113 and the holding cavity 111 are eccentrically set.

In this embodiment, the squeezing device 100 has a compact structure by setting the holding cavity 111 and the diversion cavity 113 to be eccentric so that the squeezing cavity 112 and the holding cavity 111 are also eccentric, so that the outer wall of the squeezing structure 110 can form a space for such purposes as draining juice, placing circuits, etc.

Further, as shown in FIG. 2, the squeezing device 100 also includes a cover body 130, which is provided with a feeding port 131 connected to the holding cavity 111, and the cross section diameter of the feeding port 131 is not greater than 45mm.

As shown in FIG. 2, the diameter of feeding port 131 is E, which is less than or equal to 45mm. Specifically, 20mm, 40mm and 45mm can be selected for E, which is not specified here.

As shown in FIG. 2, the height of diversion cavity 113 is H, and 10mm≤H≤200mm. Specifically, H can be 20mm, 30mm, or 100mm.

As shown in FIG. 3, in an embodiment, the squeezing device 100 is also provided with a discharging part 150, which is arranged on the inner wall of the diversion cavity 113_{∘}

Thus, when the fruit in the holding cavity 111 enters the squeezing cavity 112 through the diversion cavity 113, the discharging part 150 can conduct the diversion of the fruit to reduce the movement resistance of the fruit, featuring simple structure and good effect.

Further, the juicer 10 also includes induction part 300, which is arranged on the main body 200; induction part 300 is used to obtain the position signal of the squeezing device 100 when the squeezing device 100 is connected to the main body 200.

It can be understood that by setting the induction part 300, when the squeezing device 100 is connected with the main body 200, the induction part 300 can obtain the position signal of the squeezing device 100 to control the start or close of the juicer 10.

As shown in FIG. 2, in an embodiment, the squeezing device 100 also includes a contact part 140, the contact part 140 is at least partially protruding from the squeezing structure 110, the main body 200 is provided with a connecting groove 210, and the induction part 300 is at least partially arranged in the connecting groove 210; when the squeezing device 100 is connected with the main body 200, the contact part 140 is inserted into the connecting groove 210 and contact with the induction part 300.

Thus, when the squeezing device 100 is connected with the main body 200, the contact part 140 is inserted into the connecting groove 210, and contacts with the contact part 300, which makes the connection of the squeezing device 100 and the main body 200 compact, and ensures the engagement of the contact part 140 and the induction part 300. In addition, when the squeezing device 100 is separated from the main body 200, induction part 300 can also be protected by the shell of the main body 200, so as to prevent the induction part 300 from being knocked and damaged, featuring good using effect. Specifically, the induction part 300 can be a travel switch or, an infrared sensor, a Hall sensor, or a reed pipe in an embodiment. When the induction part 300 is reed tube, the contact part 140 can be a magnet. The induction effect of induction part 300 can be realized by magnetic control of the reed tube.

Finally, it should be noted that the above embodiments are used only to illustrate the technical scheme of the invention and not to restrict it; notwithstanding the detailed description of the invention by reference to the aforementioned embodiments, ordinary technician in the field should understand that the technical scheme recorded in the aforementioned embodiments can still be modified or some of the technical features of them can be substituted equally; such modification or substitution shall not remove the essence of the technical scheme from the principles and scope of the technical scheme in each embodiment of the invention.

## Claims

1. A squeezing device, comprising:
a squeezing structure, wherein the internal of the squeezing structure is provided with a holding cavity, a squeezing cavity and a diversion cavity, the diversion cavity has a relatively arranged connection port I and a connection port II, the connection port I is connected to the holding cavity, and the connection port II is connected to the squeezing cavity; wherein the cross-sectional area of the connection port I is greater than that of the connection port II; and
a squeezing head, the squeezing head is at least partially placed in the squeezing cavity, and the squeezing head is arranged with respect to the squeezing structure for relative rotation.

2. The squeezing device according to claim 1, wherein the diversion cavity is at least partially of conical diversion cavity or helical diversion cavity.

3. The squeezing device according to claim 2, wherein the included angle between the bus bar of the diversion cavity and the horizontal plane is D, and 10°≤D≤80°.

4. The squeezing device according to claim 1, wherein the cross section diameter of the holding cavity is A, and 100mm≤A≤500mm.

5. The squeezing device according to claim 1, wherein the cross section diameter of the diversion cavity is B, and 60mm≤B≤200mm.

6. The squeezing device according to claim 4 or 5, wherein the ratio of the cross section diameter of the connection port I to that of the connection port II is not greater than 10.

7. The squeezing device according to claim 1, wherein the diversion cavity and the holding cavity are eccentrically arranged.

8. The squeezing device according to claim 1, wherein the squeezing device also includes a cover body, and the cover body is provided with a feeding port connected with the holding chamber, and the cross section diameter of the feeding port is not greater than 45mm.

9. The squeezing device according to claim 1, wherein the squeezing device is also provided with a discharging part arranged on the inner wall of the diversion cavity.

10. A juicer, comprising:
a main body; and
the squeezing devices of any one of the claims 1-9, the squeezing device is detachable and can be connected to the main body, which is used to drive the squeezing head of the squeezing device for rotation.

11. The juicer according to claim 10, wherein the juicer also includes an induction part, which is arranged on the main body; when the squeezing device is connected with the main body, the induction part is used to obtain the position signal of the squeezing device.

12. The juicer according to claim 11, wherein the squeezing device also includes a contact part, the contact part is at least partially protruding from the squeezing structure, the main body is provided with a connecting groove, and the induction part is at least partially arranged in the connecting groove; when the squeezing device is connected with the main body, the contact part is inserted into the connecting groove and contact with the induction part.
